# EUROPÄISCHE PATENTSCHRIFT

(11) **EP 3 237 728 B1**
(45) Veröffentlichungstag und Bekanntmachung des Hinweises auf die Patenterteilung: **22.07.2020**
(21) Anmeldenummer: 15801390.4
(22) Anmeldetag: 25.11.2015
(51) Int. Cl.: F01D 3/04, F02C 6/12, F04D 29/08, F04D 29/16, F04D 29/041

(54) **TURBOMASCHINE**
TURBOMACHINE
TURBOMACHINE

(30) Priorität: 23.12.2014 DE 102014226951
(43) Veröffentlichungstag der Anmeldung: 01.11.2017
(73) Patentinhaber: Robert Bosch GmbH, 70442 Stuttgart (DE)
(72) Erfinder: RUECKERT, Frank, Ulrich, 16372 Niluefer Bursa (TR); BANZHAF, Bernd, 70563 Stuttgart (DE); EISENMENGER, Nadja, 70469 Stuttgart (DE); WENGERT, Andreas, 71522 Backnang (DE)
(86) Internationale Anmeldenummer: PCT/EP2015/077623
(87) Internationale Veröffentlichungsnummer: WO 2016/102137

(56) Entgegenhaltungen:
- EP-A1- 0 102 334
- WO-A1-2014/087966
- DE-A1-102004 041 439
- DE-B3-102006 049 516
- US-A- 4 170 435
- US-A- 5 248 239
- US-A1- 2008 181 546

## Beschreibung

Die Erfindung betrifft eine Turbomaschine mit einem Laufrad, wobei auf der Rückseite des Laufrads ein Druckteiler angeordnet ist. Die Turbomaschine kann beispielsweise zur Abwärmenutzung einer Brennkraftmaschine verwendet werden.

### Stand der Technik

Turbomaschinen mit einem Gehäuse und einem in dem Gehäuse auf einer Abtriebswelle angeordneten Laufrad sind aus dem Stand der Technik bekannt, beispielsweise aus der Patentschrift EP 1 281 836 B1. Die bekannte Turbomaschine weist einen Einströmbereich und einen Ausströmbereich auf und wird im Betrieb mit einem Arbeitsmedium durchströmt. Das Arbeitsmedium strömt in den Einströmbereich, entlang einer an dem Laufrad ausgebildeten Vorderseite und anschließend aus dem Ausströmbereich, wobei ein Druckgefälle auf der Vorderseite zwischen dem Einströmbereich und dem Ausströmbereich besteht. Weiterhin weist die bekannte Turbomaschine mindestens zwei Regelventile auf, die von einem Regler gesteuert sind und den Druck auf eine Rückseite des Laufrads regeln. Dadurch kann die auf das Laufrad wirkende resultierende hydraulische Kraft so geregelt werden, dass die sich daraus ergebende Axialkraft minimiert wird. Dementsprechend wird ein Axiallager der Abtriebswelle weniger beansprucht bzw. das Axiallager kann kleiner dimensioniert werden.

Die bekannte Turbomaschine ist aufgrund des Einsatzes des Reglers und der zwei Regelventile allerdings sehr bauraum- und kostenintensiv.

Weiterhin ist aus der DE102004041439A1 eine Turbomaschine mit einem Laufrad bekannt, an dessen Rückseite eine Bürstendichtung angeordnet ist.

### Offenbarung der Erfindung

Die erfindungsgemäße Turbomaschine weist demgegenüber den Vorteil auf, dass die auf das Laufrad wirkende Axialkraft minimiert ist, bei lediglich geringen Kosten und geringem Bauraumbedarf.

Dazu umfasst die erfindungsgemäße Turbomaschine ein Gehäuse, wobei in dem Gehäuse ein auf einer Abtriebswelle angeordnetes Laufrad angeordnet ist. Die Turbomaschine weist einen Einströmbereich und einen Ausströmbereich auf und wird im Betrieb mit einem Arbeitsmedium durchströmt. Das Arbeitsmedium strömt in den Einströmbereich, entlang einer an dem Laufrad ausgebildeten Vorderseite und anschließend aus dem Ausströmbereich, wobei ein Druckgefälle auf der Vorderseite zwischen dem Einströmbereich und dem Ausströmbereich besteht. An der der Vorderseite gegenüberliegenden Rückseite des Laufrads ist ein Druckteiler angeordnet, so dass zumindest ein Teil der Rückseite mit einem geringeren Druck als dem Druck des Einströmbereichs belastet ist.

Erfindungsgemäß ist der Druckteiler als dampfgeschmierte Dichtung ausgeführt. Dabei umfasst die Dichtung einen Gleitring, der mit der Rückseite des Laufrads zusammenwirkt. Die dampfgeschmierte Dichtung erfolgt vorzugsweise berührungslos bei einem sehr engen Dichtspalt. Dadurch ergibt sich ein nur sehr geringer Reibverlust und auch ein nur sehr geringer Verschleiß. Die dampfgeschmierte Dichtung kann dabei auch als Drossel mit einem äußerst geringen Strömungsquerschnitt betrachtet werden.

Erfindungsgemäß wirkt der Gleitring mit der Rückseite des Laufrads in axialer Richtung zusammen. Dadurch ist die Anfälligkeit der Dichtung hinsichtlich Form- und Lagetoleranzen weniger anfällig. Die Dichtwirkung ist somit optimiert und der Verschleiß der Dichtung minimiert.

Die dampfgeschmierte Dichtung kann in vorteilhaften Ausführungen auch als Drossel mit einem äußerst geringen Strömungsquerschnitt betrachtet werden. Die Funktion des dampfgeschmierten Druckteilers ist damit im Wesentlichen die Sicherstellung einer berührungslosen, definierten möglichst kleinen Drosselstelle um mit dieser eine Druckteilfunktion sicherzustellen.

Der Druckteiler führt zu einem Sprung im Druckverlauf des auf die Rückseite wirkenden Druckes bzw. senkt den Druck, der auf zumindest einen Teil der Rückseite wirkt, gegenüber dem Druckniveau des Einströmbereichs. Dadurch wird die auf das Laufrad wirkende resultierende hydraulische Kraft eingestellt.

In einer vorteilhaften Weiterbildung ist am Gehäuse ein Wellendichtring angeordnet, wobei der Wellendichtring mit der Abtriebswelle zusammenwirkt. Zwischen dem Gehäuse, dem Wellendichtring, dem Laufrad und dem Druckteiler ist ein Druckraum ausgebildet. Der Wellendichtring dichtet den Druckraum zu einem Umgebungsraum ab, beispielsweise zur Atmosphäre oder einem Getrieberaum eines mit der Abtriebswelle mechanisch verbundenen Getriebes. Der Druckraum kann hydraulisch über ein Ventil geregelt oder gesteuert werden; dazu kann er beispielweise hydraulisch mit anderen Volumen der Expansionsmaschine verbunden werden bzw. schaltbar verbunden werden. Die Flächen des Laufrads, die am Druckraum anliegen, sind demzufolge mit dem Druck des Druckraums beaufschlagt. Somit kann die resultierende auf das Laufrad wirkende Axialkraft gesteuert bzw. geregelt werden.

In einer vorteilhaften Weiterbildung ist der Druckraum hydraulisch mit dem Ausströmbereich verbunden. Dadurch ist zumindest ein Teil der Rückseite des Laufrads mit dem Druckniveau des Ausströmbereichs, mit dem Ausströmdruck, beaufschlagt bzw. mit einem Druckniveau, welches vom Ausströmdruck gesteuert ist. Dadurch, dass auch die Druckbelastung auf der Vorderseite des Laufrads vom Ausströmdruck abhängt, werden die Druckbelastungen auf Vorder- und Rückseite des Laufrads in ähnlicher Weise verändert, wenn die Turbomaschine in unterschiedlichen Betriebspunkten betrieben wird. Die auf das Laufrad wirkende resultierende Axialkraft kann so auf einem konstant niedrigen Niveau gehalten werden. Vorzugsweise wird das Niveau der Axialkraft jedoch so eingestellt, dass es bei den unterschiedlichen Betriebspunkten nicht zu einer Richtungsänderung der Axialkraft kommt, da die Axialkraft so nur in einer Richtung aufgenommen werden muss.

In einer vorteilhaften Ausführung der Erfindung erfolgt die hydraulische Verbindung vom Druckraum zum Ausströmbereich über zumindest eine in der Abtriebswelle ausgebildete Bohrung. Dadurch ist die hydraulische Verbindung ohne zusätzlichen Bauraumbedarf und kostengünstig ausgeführt. In einer Alternative kann die hydraulische Verbindung auch durch eine im Laufrad ausgebildete Bohrung erfolgen.

In einer vorteilhaften Weiterbildung unterteilt der Druckteiler die Rückseite des Laufrads bezüglich der Druckbelastung im Betrieb in einen ersten Bereich und einen zweiten Bereich. Der erste Bereich ist im Betrieb mit einem höheren Druck belastet als der zweite Bereich. Der Druckteiler unterteilt das an die Rückseite angrenzende mit Arbeitsmedium gefüllte Volumen so, dass die beiden Bereiche der Rückseite mit unterschiedlichen Drücken beaufschlagt sind; damit wird eine gewünschte resultierende Axialkraft eingestellt. In einer vorteilhaften Ausführung wird durch diese Anordnung der Druckraum ausgebildet, und der zweite Bereich bildet eine Wand des Druckraums. Die beiden Bereiche können vorteilhafterweise hydraulisch mit Volumina der Turbomaschine verbunden sein, so dass auf ohnehin in der Turbomaschine vorhandene Druckniveaus zugegriffen wird. Die Anordnung einer weiteren Druckkammer zur Axialkraftregelung kann dadurch entfallen.

In einer vorteilhaften Ausführung ist der erste Bereich mit dem Druckniveau des Einströmbereichs beaufschlagt. Bei vielen Turbomaschinen, speziell bei Radialturbinen, ist die Rückseite des Laufrads ohnehin in diversen Ausführungen mit dem Druckniveau des Einströmbereichs beaufschlagt. Somit kann diese Beaufschlagung kostenneutral erfolgen. Weiterhin ist das Druckniveau des Einströmbereichs vergleichsweise konstant bzw. sehr gut steuer- und regelbar, so dass auch die Druckbeaufschlagung des ersten Bereichs sehr robust bzw. gut kontrollierbar ist.

In einer vorteilhaften Weiterbildung ist der zweite Bereich mit dem Druckniveau des Ausströmbereichs beaufschlagt. Auch das Druckniveau des

Ausströmbereichs ist vergleichsweise konstant bzw. sehr gut steuer- und regelbar, so dass auch die Druckbeaufschlagung des zweiten Bereichs sehr robust bzw. gut kontrollierbar ist.

In einer nicht zur Erfindung gehörenden Ausführung ist der Druckteiler als Drossel ausgeführt. Dies ist eine sehr kostengünstige Ausführung, da vorzugsweise lediglich ein vergleichsweise kleiner Spalt zwischen dem Laufrad und dem Gehäuse vorgesehen werden muss. Speziell für Ausführungen, in welchen der Druckraum mit dem Ausströmbereich verbunden ist, kann die Ausführung des Druckteilers als Drossel sehr vorteilhaft sein, da dann eine Leckage durch die Drossel zum einen sehr gut kontrollierbar ist und zum anderen den Wirkungsgrad der Turbomaschine nur sehr geringfügig vermindert.

In einer anderen nicht zur Erfindung gehörenden Ausführung ist der Druckteiler als Labyrinthdichtung ausgeführt. Labyrinthdichtungen haben den Vorteil, dass sie berührungslos, also verschleissfrei, arbeiten und dennoch eine sehr gute Dichtwirkung erzielen. Die geringe Leckage muss bei der Auslegung der Turbomaschine jedoch beachtet werden, da die Labyrinthdichtung wie eine sehr starke Drossel mit einer langen Drossellänge wirkt.

In einer anderen nicht zur Erfindung gehörenden Ausführung ist der Druckteiler als mediendichte Dichtung ausgeführt, vorzugsweise als Bürstenhalter mit einem Bürstenkopf, oder als Dichtring mit einer Dichtlippe. Diese Ausführung hat den Vorteil, dass keine weitere Abdichtung zwischen der Abtriebswelle und dem Gehäuse erforderlich ist. Je nach abzudichtendem Druck, beispielsweise bei Radialturbinen der Einströmdruck, und Rotationsgeschwindigkeit der Abtriebswelle wählt der Fachmann dabei die hinsichtlich Dichtheit über der Lebensdauer und Verschleissbeständigkeit optimale mediendichte Dichtung aus.

In einer anderen nicht zur Erfindung gehörenden Ausführung der erfindungsgemäßen Turbomaschine ist der Druckteiler als mediendichte Dichtung ausgeführt, wobei der Druckteiler die Rückseite in einen ersten Bereich und einen zweiten Bereich unterteilt. Der erste Bereich ist mit dem Druckniveau des Einströmbereichs beaufschlagt, und der zweite Bereich ist entweder mit dem Umgebungsdruck beaufschlagt oder mit dem Druckniveau eines mit der Abtriebswelle mechanisch verbundenen Getriebes. Dadurch übernimmt der Druckteiler auch gleich die Dichtungsfunktion der Turbomaschine zu den Anbauteilen, wie zum Beispiel einem Getriebe oder einem Generator, oder zu der Umgebung. Auf einen Wellendichtring zwischen Gehäuse und Abtriebswelle kann in dieser Ausführung verzichtet werden.

In vorteilhaften Ausführungen ist die Turbomaschine als Radialturbine ausgeführt. Dadurch kann die Rückseite des Laufrads durch vergleichsweise einfache konstruktive Ausführungen mit den durch den Druckteiler eingestellten Drücken belastet werden, während die Hauptströmungsrichtung des Arbeitsmediums auf der Vorderseite des Laufrads verläuft.

In bevorzugten Ausführungen ist die erfindungsgemäße als Expansionsmaschine ausgeführte Turbomaschine in einem Abwärmerückgewinnungssystem insbesondere einer Brennkraftmaschine angeordnet. Das Abwärmerückgewinnungssystem umfasst in Flussrichtung des Arbeitsmediums eine Pumpe, einen Verdampfer, die Turbomaschine und einen Kondensator. Das Abwärmerückgewinnungssystem wird vorzugsweise nicht bei einem einzigen Betriebspunkt, sondern bei sehr unterschiedlichen Betriebspunkten betrieben, da auch die Brennkraftmaschine bei unterschiedlichen Betriebspunkten betrieben wird. Dadurch ist es für den Gesamtwirkungsgrad und die Lebensdauer des Abwärmerückgewinnungssystems sehr günstig, wenn auch die Turbomaschine bei den unterschiedlichen Betriebsbedingungen laufen kann, ohne dass die Axiallager der Abtriebswelle übermäßig verschleißen. Die erfindungsgemäße Turbomaschine ist demzufolge hierfür besonders gut geeignet.

### Zeichnungen

**Fig.1** zeigt schematisch eine Turbomaschine innerhalb eines Abwärmerückgewinnungssystems, wobei nur die wesentlichen Bereiche dargestellt sind.
**Fig.2** zeigt schematisch ein Ausführungsbeispiel der Turbomaschine, wobei nur die wesentlichen Bereiche dargestellt sind.
**Fig.3** zeigt schematisch ein weiteres Ausführungsbeispiel der Turbomaschine, wobei nur die wesentlichen Bereiche dargestellt sind.
**Fig.4** zeigt schematisch ein weiteres Ausführungsbeispiel der Turbomaschine, wobei nur die wesentlichen Bereiche dargestellt sind.
**Fig.5** zeigt schematisch ein weiteres Ausführungsbeispiel der Turbomaschine, wobei nur die wesentlichen Bereiche dargestellt sind.
**Fig. 6** zeigt eine nicht zur Erfindung gehörende Ausführungsform der Turbomaschine im Bereich des Druckteilers, wobei nur die wesentlichen Bereiche dargestellt sind.
**Fig. 7** zeigt eine weitere nicht zur Erfindung gehörende Ausführungsform der Turbomaschine im Bereich des Druckteilers, wobei nur die wesentlichen Bereiche dargestellt sind.
**Fig. 8** zeigt eine weitere nicht zur Erfindung gehörende Ausführungsform der Turbomaschine im Bereich des Druckteilers, wobei nur die wesentlichen Bereiche dargestellt sind.

### Beschreibung

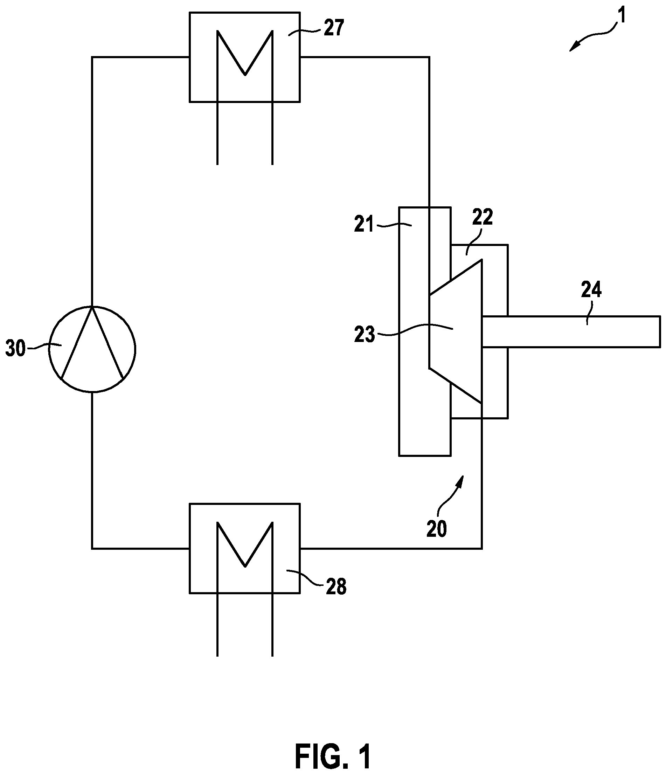

**Fig.1** zeigt schematisch eine Turbomaschine 20 innerhalb eines Abwärmerückgewinnungssystems 1, wobei nur die wesentlichen Bereiche dargestellt sind. In dem Abwärmerückgewinnungssystem 1 sind in Flussrichtung eines Arbeitsmediums eine Pumpe 30, ein Verdampfer 27, eine Turbomaschine 20 und ein Kondensator 28 angeordnet. Der Verdampfer 27 ist auch an eine nicht dargestellte Abgasleitung einer nicht dargestellten Brennkraftmaschine angeschlossen. Flüssiges Arbeitsmedium wird von der Pumpe 30 verdichtet und zum Verdampfer 27 gefördert, wo es durch die Wärmeenergie des Abgases der Brennkraftmaschine verdampft wird. Anschließend wird das verdampfte Arbeitsmedium der Turbomaschine 20 zugeführt, wo es unter Abgabe von mechanischer Energie entspannt wird; in diesem Ausführungsbeispiel wird die Turbomaschine 20 somit als Dampfturbine betrieben. Anschließend wird das Arbeitsmedium im Kondensator 28 wieder verflüssigt.

Die Turbomaschine 20 weist eine Abtriebswelle 24 auf, über die mechanische Leistung abgegeben werden kann, beispielsweise an einen Generator, an einen Turbolader oder an ein Getriebe. Die Turbomaschine 20 umfasst weiterhin einen Einströmbereich 21, ein Laufrad 23 und einen Ausströmbereich 22. Das verdichtete Arbeitsmedium strömt im Einströmbereich 21 in die Turbomaschine 20 ein, strömt dort entlang des Laufrads 23 und anschließend im Ausströmbereich 22 wieder aus der Turbomaschine. Während des Durchströmens der Turbomaschine 20 wird das Arbeitsmedium zwischen Einströmbereich 21 und Ausströmbereich 22 entspannt. Die dabei abgegebene mechanische Energie wird durch die Abtriebswelle 24 an einen oder mehrere nicht dargestellte Verwerter übertragen.

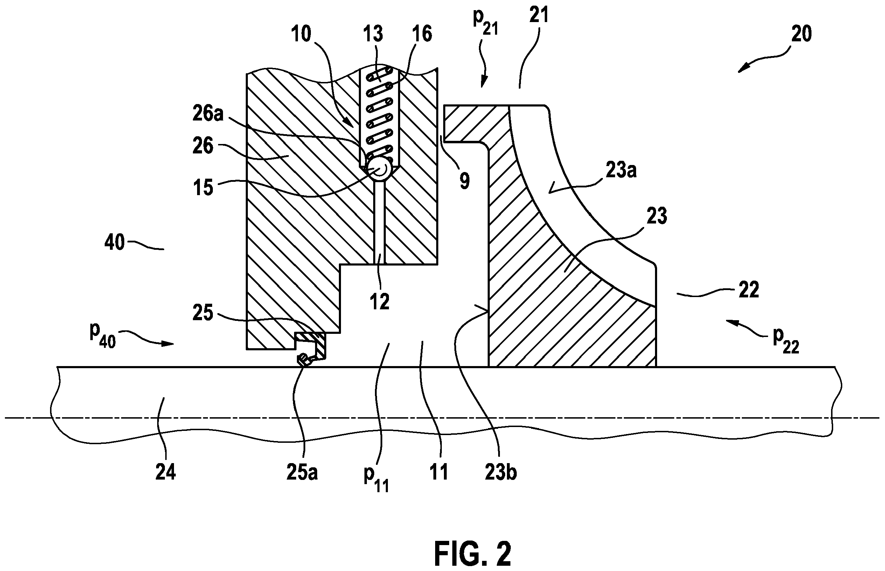

**Fig.2** zeigt schematisch ein Ausführungsbeispiel der Turbomaschine 20, wobei nur die wesentlichen Bereiche dargestellt sind. In diesem Ausführungsbeispiel ist die Turbomaschine 20 eine Radialturbine, wobei durch Umkehrung der Strömungsrichtung des Arbeitsmediums die Turbomaschine 20 auch als Pumpe betrieben werden kann.

Die Turbomaschine 20 umfasst ein Gehäuse 26 und im Gehäuse 26 angeordnet das auf der Abtriebswelle 24 angeordnete Laufrad 23, den Einströmbereich 21, den Ausströmbereich 22, einen Druckteiler 9, ein Ventil 10, einen Druckraum 11 und einen Wellendichtring 25. Im Ausführungsbeispiel der **Fig.2** ist der Druckteiler 9 als Drossel ausgebildet.

Der Einströmbereich 21 weist einen Einströmdruck p₂₁ auf, der Ausströmbereich 22 einen Ausströmdruck p₂₂. Das Arbeitsmedium strömt entlang einer Vorderseite 23a des Laufrads 23 vom Einströmbereich 21 zum Ausströmbereich 22 und wird dabei entspannt, so dass ein Druckgefälle zwischen dem Einströmdruck p₂₁ und dem Ausströmdruck p₂₂ entsteht.

Auf der der Vorderseite 23a gegenüberliegenden Rückseite 23b des Laufrads 23 ist zwischen dem Gehäuse 26 und dem Laufrad 23 der Druckraum 11 ausgebildet, welcher unter dem Kompensationsdruck p₁₁ steht. Bezüglich des Laufrads 23 wirkt der Kompensationsdruck p₁₁ den axialen Komponenten des Einströmdrucks p₂₁ und des Ausströmdrucks p₂₂ auf der Vorderseite 23a entgegen.

Der am Gehäuse 26 angeordnete Wellendichtring 25 wirkt mit einer an ihm angeordneten Dichtlippe 25a mit der Abtriebswelle 24 zusammen und dichtet dadurch den Druckraum 11 unter Kompensationsdruck p₁₁ gegen einen Umgebungsraum 40 unter Umgebungsdruck p₄₀ ab. Das Ventil 10, das als Druckhalteventil für den Druckraum 11 wirkt, ist im Gehäuse 26 angeordnet. Je nach Hauptbetriebszuständen von Umgebungsraum 40 und Druckraum 11 kann die Dichtlippe 25a dabei so angeordnet sein wie in **Fig.2** gezeigt, oder auch so, dass der Kompensationsdruck p₁₁ die Dichtlippe 25a gegen die Abtriebswelle 24 drückt.

Das Ventil 10 umfasst einen Einlasskanal 12, einen Auslasskanal 13, einen kugelförmigen Schließkörper 15 und eine Schließfeder 16. Der Einlasskanal 12 mündet in den Druckraum 11. Der Auslasskanal 13 mündet vorteilhafterweise in einen Bereich, der einen geringeren Druck aufweist als der Druckraum 11, zum Beispiel in den Ausströmbereich 22. Der Schließkörper 15 wirkt mit einem an dem Gehäuse 26 ausgebildeten Ventilsitz 26a zusammen und öffnet und schließt dadurch eine hydraulische Verbindung von dem Einlasskanal 12 zu dem Auslasskanal 13. Die Schließfeder 16 drückt den Schließkörper 15 gegen den Ventilsitz 26a. Durch die Schließfeder 16 kann somit ein Mindestdruck in dem Druckraum 11 eingestellt werden.

Zwischen dem Gehäuse 26 und dem Laufrad 23 bzw. der Rückseite 23b ist der Druckteiler 9 als Drossel ausgebildet. Der Druckteiler 9 verbindet den Druckraum 11 hydraulisch mit dem Einströmbereich 21. Dabei ist in diesem Ausführungsbeispiel die gesamte Rückseite 23b mit dem Kompensationsdruck p₁₁ des Druckraums beaufschlagt. Dies ist jedoch nicht zwingend erforderlich: in alternativen Ausführungsformen kann der Druckteiler 9 auch so angeordnet sein, dass ein erster Bereich der Rückseite 23b mit dem Einströmdruck p₂₁ beaufschlagt ist und nur ein zweiter Bereich der Rückseite 23b mit dem Kompensationsdruck p₁₁.

In zur **Fig.2** alternativen Ausführungsformen kann der Druckraum 11 über den Druckteiler 9 auch mit einem Mischbereich zwischen Einströmbereich 21 und Ausströmbereich 22 verbunden sein. Es ist jedoch darauf zu achten, dass an dem Druckteiler 9 der dem Druckraum 11 gegenüberliegende Bereich - unabhängig davon ob Einströmbereich 21 oder Mischbereich - im Betrieb der Turbomaschine 20 einen größeren Druck aufweist als der Ausströmbereich 22.

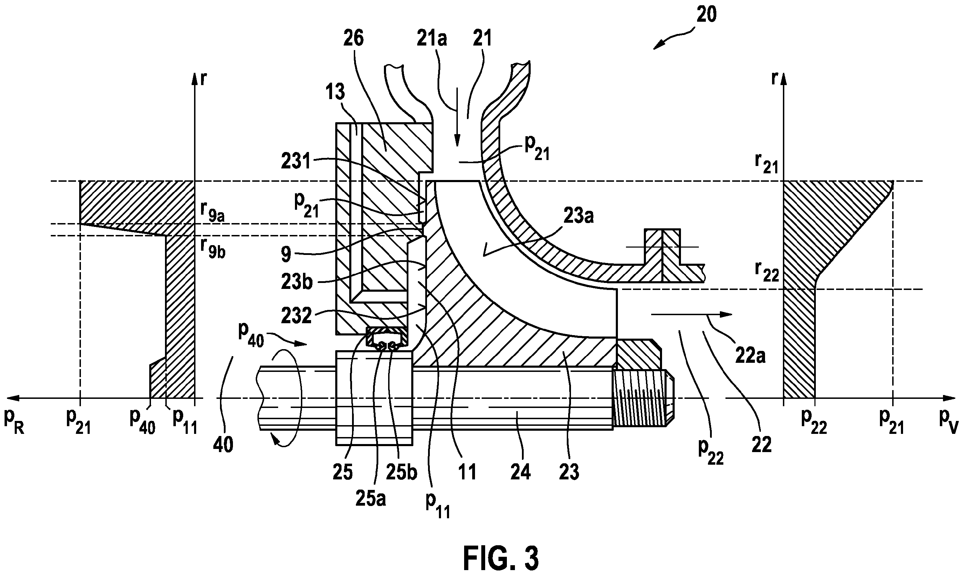

**Fig.3** zeigt schematisch ein weiteres Ausführungsbeispiel der Turbomaschine 20, wobei nur die wesentlichen Bereiche dargestellt sind. Auch diese Turbomaschine 20 ist als Radialturbine ausgebildet, mit einer Einströmrichtung 21a des Arbeitsmediums im Einströmbereich 21 und einer Ausströmrichtung 22a des Arbeitsmediums im Ausströmbereich 22. Auch die Turbomaschine 20 dieses Ausführungsbeispiels kann durch Umkehrung der Strömungsrichtungen 21a, 22a als Pumpe betrieben werden.

Weiterhin zeigt **Fig.3** die Druckverläufe pv und p_{R} auf der Vorderseite 23a bzw. auf der Rückseite 23b des Laufrads 23.

In großen Teilen ist die Turbomaschine 20 des Ausführungsbeispiels der **Fig.3** ähnlich dem Ausführungsbeispiel der **Fig.2** aufgebaut, so dass auf diese Teile nicht mehr weiter eingegangen werden muss. Unterschiedlich zur Fig.2 sind gestaltet:
- Der Wellendichtring 25 weist zwei Dichtlippen 25a und 25b auf, so dass der Druckraum 11 gegenüber dem Umgebungsraum 40 in beiden Richtungen gut abgedichtet werden kann.
- Der Druckteiler 9 ist nicht am äußersten Umfang des Laufrads 23 angeordnet, sondern zwischen dem äußersten Umfang und dem Durchmesser der Abtriebswelle 24, so dass auf der Rückseite 23b ein erster Bereich 231 mit dem Einströmdruck p₂₁ des Einströmbereichs 21 beaufschlagt ist und ein zweiter Bereich 232 mit dem niedrigeren Druck des Druckraums 11, nämlich mit dem Kompensationsdruck p₁₁.
- Es ist kein Ventil 10 dargestellt, sondern nur ein Auslasskanal 13, der aus dem Druckraum 11 führt. Hier kann in diversen Weiterbildungen am anderen Ende des Auslasskanals 13 jedoch dennoch ein Ventil angeordnet sein; der Auslasskanal 13 kann aber auch mit dem Umgebungsraum 40, dem Ausströmbereich 22, oder einem weiteren Volumen, beispielsweise unter Atmosphärendruck, verbunden sein.

Weiterhin sind in der **Fig.3** die Druckverläufe am Laufrad 23 über dem Radius r des Laufrads 23 dargestellt:
- Im linken Diagramm der Druckverlauf p_{R} auf der Rückseite 23b.
- Im rechten Diagramm der Druckverlauf p_{V} auf der Vorderseite 23a.

Der Druckverlauf p_{V} auf der Vorderseite 23a zeigt einen stetigen Abfall des Drucks vom Einströmdruck p₂₁ zum Ausströmdruck p₂₂ mit abnehmendem Radius r.

Der Druckverlauf p_{R} auf der Rückseite 23b zeigt den konstanten Einströmdruck p₂₁ am ersten Bereich 231, einen stetigen Abfall des Drucks über dem Druckteiler 9 vom Einströmdruck p₂₁ zum Kompensationsdruck p₁₁, einen konstanten Kompensationsdruck p₁₁ am zweiten Bereich 232 und einen Drucksprung am Wellendichtring 25 vom Kompensationsdruck p₁₁ zum Umgebungsdruck p₄₀. Dabei kann - je nach Ausführung der Turbomaschine 20 und je nach Betriebspunkt, in dem sie betrieben wird - der Kompensationsdruck p₁₁ kleiner (wie in **Fig.3** dargestellt), aber auch gleich groß oder größer als der Umgebungsdruck p₄₀ sein.

Der Wellendichtring 25 kann auch alternativ zur Ausführung der **Fig.3** gestaltet sein, nämlich indem die beiden Dichtlippen 25a, 25b anders als in **Fig.3** dargestellt gebogen sind, so dass der Kompensationsdruck p₁₁ die Dichtlippe 25b gegen die Abtriebswelle 24 drückt und der Umgebungsdruck p₄₀ die Dichtlippe 25a gegen die Abtriebswelle 24 drückt.

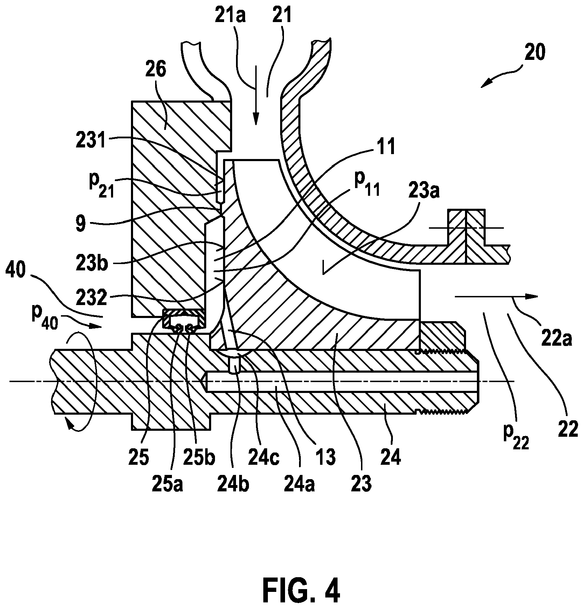

**Fig.4** zeigt schematisch ein weiteres Ausführungsbeispiel der Turbomaschine 20, wobei nur die wesentlichen Bereiche dargestellt sind. Das Ausführungsbeispiel der **Fig.4** ist ähnlich dem Ausführungsbeispiel der **Fig.3****,** so dass im Folgenden nur auf die Unterschiede eingegangen wird.

Im Unterschied zur **Fig.3** ist im Ausführungsbeispiel der **Fig.4** der Auslasskanal 13 im Laufrad 23 ausgebildet. In der Abtriebswelle 24 ist in axialer Richtung eine Sacklochbohrung 24a ausgebildet. Weiterhin sind in der Abtriebswelle 24 ausgebildet: radial zur Sacklochbohrung 24a eine Verbindungsbohrung 24b und auf der Oberfläche der Abtriebswelle 24 eine Nut 24c, die den Auslasskanal 13 hydraulisch mit der Verbindungsbohrung 24b verbindet. Die Sacklochbohrung 24a mündet in den Ausströmbereich 22. Dadurch ist eine hydraulische Verbindung in Flussrichtung des Arbeitsmediums vom Druckraum 11 über die Nut 24c, die Verbindungsbohrung 24b und die Sacklochbohrung 24a zum Ausströmbereich 22 realisiert. Im Ausführungsbeispiel der **Fig.4** haben die Verbindungsbohrung 24b und die Sacklochbohrung 24a keine drosselnde Funktion; damit weist der Druckraum 11 das gleiche Druckniveau auf wie der Ausströmbereich 22: p₁₁ = p₂₂.

In alternativen Ausführungsformen können die Verbindungsbohrung 24b und/oder die Sacklochbohrung 24a jedoch auch eine drosselnde Funktion haben; dann gilt: p₁₁ > p₂₂.

In alternativen Ausführungsformen zur **Fig.4** kann die hydraulische Verbindung vom Druckraum 11 zum Ausströmbereich 22 auch durch eine oder mehrere im Laufrad 23 ausgebildete Bohrungen erfolgen.

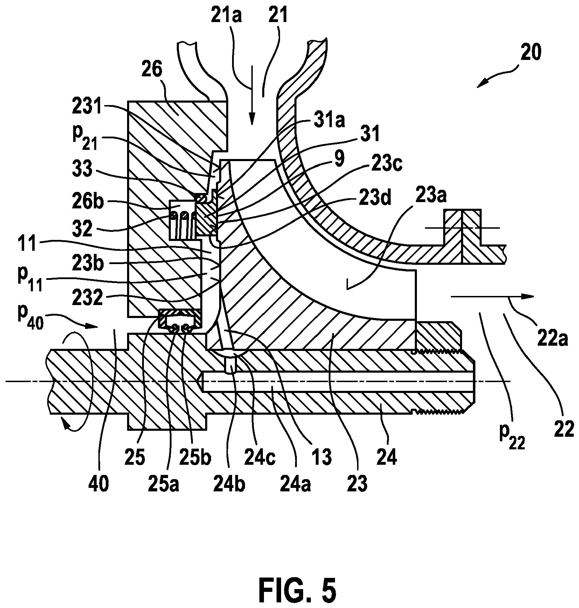

**Fig.5** zeigt schematisch ein erfindungsgemäßes Ausführungsbeispiel der Turbomaschine 20, wobei nur die wesentlichen Bereiche dargestellt sind. Das Ausführungsbeispiel der **Fig.5** ist ähnlich dem Ausführungsbeispiel der **Fig.4****,** so dass im Folgenden nur auf die Unterschiede eingegangen wird.

Der Druckteiler 9 ist im Ausführungsbeispiel der **Fig.5** unterschiedlich zur **Fig.4** gestaltet, nämlich als dampfgeschmierte Dichtung, wobei das verdampfte Arbeitsmedium als Dampfpolster verwendet wird. Auf der Rückseite 23b des Laufrads 23 ist ein Absatz 23c angeordnet. An dem Absatz 23c ist stirnseitig in Richtung des Gehäuses 26 eine Gleitfläche 23d angeordnet. In dem Gehäuse 26 ist gegenüberliegend der Gleitfläche 23d eine Aufnahmenut 26b ausgebildet. Zumindest teilweise innerhalb der Aufnahmenut 26b ist ein Gleitring 31 angeordnet. Eine am Gleitring 31 ausgebildete Stirnfläche 31a wirkt mit der Gleitfläche 23d vorzugsweise in axialer Richtung des Laufrads 23 zusammen. Eine in der Aufnahmenut 26b angeordnete Gleitringfeder 32 spannt den Gleitring 31 gegen das Laufrad 23 vor. Radial zwischen Gleitring 31 und Gehäuse 26 ist ein Dichtring 33 angeordnet, der den Gleitring 31 zum Gehäuse 26 abdichtet.

In Weiterbildungen der Erfindung sind in der Gleitfläche 23d Schmiertaschen ausgebildet, in denen sich im Betrieb verdampftes Arbeitsmedium sammeln kann, so dass sich ein tribologisch sehr günstiges Dampfpolster zwischen der Gleitfläche 23d und der Stirnfläche 31a ausbildet.

Bei niedrigen Rotationsgeschwindigkeiten des Laufrads 23 kommt der Gleitring 31 mit seiner Stirnfläche 31a durch die Federkraft der Gleitringfeder 32 in Anlage zur Gleitfläche 23d des Laufrads 23. Die hydraulische Verbindung vom Einströmbereich 21 zum Druckraum 11 ist getrennt. Bei hohen Rotationsgeschwindigkeiten des Laufrads 23 bildet sich ein Gleitfilm bzw. ein Dampfpolster des Arbeitsmediums zwischen der Gleitfläche 23d und der Stirnfläche 31a aus, so dass die beiden Flächen voneinander abheben und dadurch eine Drosselstelle gebildet wird, wobei aufgrund des Dampfpolsters nur eine sehr geringe Leckage vom Einströmbereich 21 in den Druckraum 11 stattfindet.

Die axiale Wirkrichtung des Kontakts zwischen der Gleitfläche 23d und der Stirnfläche 31a weist gegenüber einer radialen Wirkrichtung den Vorteil auf, dass eine etwaige Unebenheit dieser beiden ebenen Flächen 23d, 31a deutlich weniger negative Auswirkungen auf Dichtheit und Verschleiß hat als eine Abweichung von der Koaxialität bzw. Zylindrizität von alternativen zylindrischen Flächen.

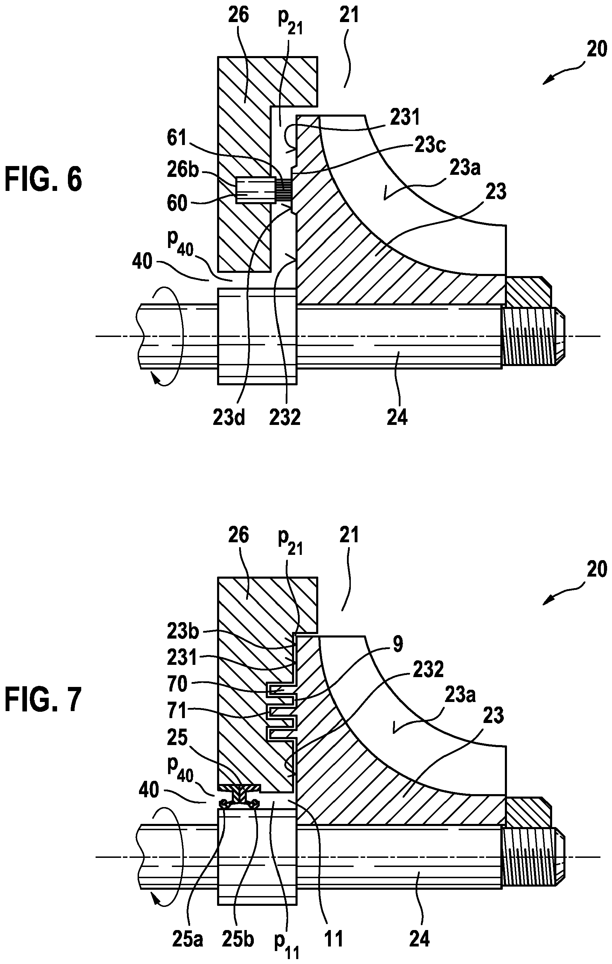

Die **Figuren 6 bis 8** zeigen nicht zur Erfindung gehörende Ausführungsformen feiner Turbomaschine 20 im Bereich des Druckteilers 9 zwischen Gehäuse 26 und Laufrad 23, wobei der Druckteiler 9 auch als Dichtstelle gestaltet sein kann.

**Fig.6** zeigt einen in der Aufnahmenut 26b angeordneten Bürstenhalter 60. Am Bürstenhalter 60 ist ein Bürstenkopf 61 angeordnet, der mit der am Absatz 23c ausgebildeten Gleitfläche 23d des Laufrads 23 zusammenwirkt. Je nach Gestaltung des tribologischen Systems zwischen Bürstenkopf 61 und Gleitfläche 23d unter den verschiedenen Betriebsbedingungen der Turbomaschine 20 kann der Kontakt zwischen Bürstenkopf 61 und Gleitfläche 23c drosselnd oder mediendicht ausgeführt sein. Entsprechend ist dann eine Drosselstelle oder eine Dichtstelle vorhanden. Für den Fall, dass der Kontakt lediglich drosselnd wirkt, muss der Wellendichtring 25 zur Abdichtung zwischen Abtriebswelle 24 und Gehäuse 26 verwendet werden. Für den Fall, dass der Kontakt mediendicht ausgeführt ist, kann auf den Wellendichtring 25 verzichtet werden, da dann schon das Laufrad 23 zum Gehäuse 26 abgedichtet ist.

Im Ausführungsbeispiel der **Fig.6** ist der Kontakt zwischen Bürstenkopf 61 und Gleitfläche 23c mediendicht ausgeführt, so dass kein Wellendichtring zwischen Abtriebswelle 24 und Gehäuse 26 angeordnet ist. Dadurch dichtet der Bürstenkopf 61 den Einströmdruck p₂₁ des Einströmbereichs 21 gegen den Umgebungsdruck p₄₀ des Umgebungsraums 40 ab. Demzufolge ist in diesem Ausführungsbeispiel auch kein Druckraum ausgebildet.

Vorzugsweise wird auch in diesem Ausführungsbeispiel der Kontakt zwischen Bürstenkopf 61 und Gleitfläche 23d in axialer Wirkrichtung ausgeführt, um eine robuste Dichtungswirkung und möglichst geringen Verschleiß zu erzielen.

**Fig.7** zeigt die Ausführung des Druckteilers 9 als Labyrinthdichtung. Dazu sind auf der Rückseite 23b des Laufrads 23 mehrere Dichtabsätze 70 lamellenartig angeordnet. Korrespondierend dazu sind im Gehäuse 26 eine gleiche Anzahl an Dichtnuten 71 ausgebildet. Die Dichtabsätze 70 und Dichtnuten 71 greifen kämmend ineinander, so dass der Dichtspalt bzw. die Drossellänge des Druckteilers 9 dadurch sehr lang gestaltet ist. Die so gestaltete Labyrinthdichtung ist nicht komplett mediendicht ausgeführt, so dass zwischen dem Gehäuse 26 und der Abtriebswelle 24 der Wellendichtring 25 mit den zwei Dichtlippen 25a und 25b angeordnet ist.

Aufgrund des Druckteilers 9 und des Wellendichtrings 25 bildet sich im Ausführungsbeispiel der **Fig.7** auch der Druckraum 11 zwischen Druckteiler 9, Laufrad 23, Wellendichtring 25 und Gehäuse 26 aus. Für die Druckniveaus von Einströmbereich 21, Druckraum 11 und Umgebungsraum 40 gilt: p₂₁ > p₁₁ > p₄₀ oder p₂₁ > p₄₀ > p₁₁ (wenn der Druckraum 11 beispielsweise mit dem Ausströmbereich 22 verbunden ist und die als Radialturbine ausgeführte Turbomaschine 20 im Unterdruckbetrieb betrieben wird).

In einer alternativen Ausführungsform können die Dichtabsätze 70 auch am Gehäuse 26 und die Dichtnuten 71 am Laufrad 23 ausgebildet sein.

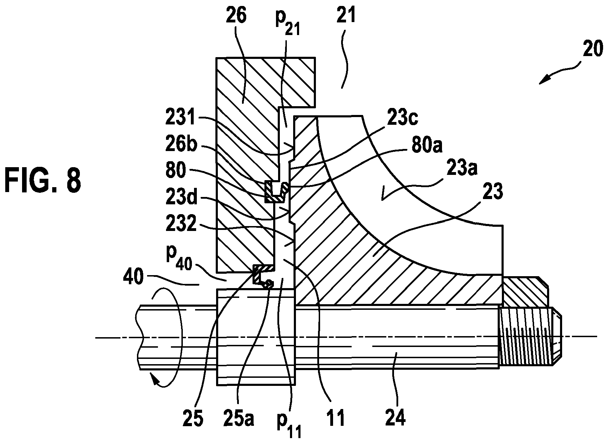

**Fig.8** zeigt einen zwischen dem Gehäuse 26 und der Abtriebswelle 24 angeordneten Wellendichtring 25 mit einer Dichtlippe 25a. Zusätzlich ist zwischen dem Gehäuse 26 und dem Laufrad 23 ein weiterer Dichtring 80 mit einer weiteren Dichtlippe 80a angeordnet. Der weitere Dichtring 80 ist in der Aufnahmenut 26b des Gehäuses 26 angeordnet. Die weitere Dichtlippe 80a wirkt mit der am Absatz 23c ausgebildeten Gleitfläche 23d des Laufrads 23 zusammen.

Dadurch ist zwischen Wellendichtring 25, Gehäuse 26, weiterem Dichtring 80 und Laufrad 23 der Druckraum 11 ausgebildet. Der weitere Dichtring 80 trennt den Einströmbereich 21 vom Druckraum 11 üblicherweise mediendicht, so dass keine Drosselstelle ausgebildet ist. Für die Druckniveaus von Einströmbereich 21, Druckraum 11 und Umgebungsraum 40 gilt auch hier: p₂₁ > p₁₁ > p₄₀ oder p₂₁ > p₄₀ > p₁₁. Die Dichtlippe 25a und die weitere Dichtlippe 80a sind dabei immer so angeordnet, dass sie zum Volumen mit dem höheren Druckniveau gekrümmt sind, so dass sie von diesem Druckniveau auf die Dichtfläche ihres Dichtpartners, also Laufrad 23 oder Abtriebswelle 24, gedrückt werden.

Die Funktionsweise der erfindungsgemäßen Turbomaschine 20 ist wie folgt: Im Betrieb der Turbomaschine 20 gibt es ein Druckgefälle auf der Vorderseite 23a des Laufrads 23. Wird die Turbomaschine 20 als Radialturbine betrieben, wie in den Ausführungsbeispielen der **Figuren 2 bis 8** dargestellt, so fällt der Druck vom radial außenliegenden Einströmbereich 21 zum radial innenliegenden Ausströmbereich 22 von Einströmdruck p₂₁ zu Ausströmdruck p₂₂. Wird die Turbomaschine als Pumpe betrieben so kehrt sich die Strömungsrichtung des Arbeitsmediums um und entsprechend sind auch die beiden Bereiche Einströmbereich 21 und Ausströmbereich 22 entgegengesetzt angeordnet; dennoch gibt es auch für diese Ausführungen ein Druckgefälle auf der Vorderseite 23a.

Das Druckgefälle auf der Vorderseite 23a erzeugt eine Axialkraft auf das Laufrad 23, also im Falle einer Radialturbine eine Kraft entgegen orientiert zur Ausströmrichtung 22a. Erfindungsgemäß wird der Druck auf der Rückseite 23b des Laufrads 23 nun mit Hilfe des Druckteilers 9 so gestaltet, dass dieser Druck in etwa eine zu der auf die Vorderseite 23a wirkenden Axialkraft gleich große Gegenkraft erzeugt, so dass die auf das Laufrad 23 wirkende resultierende hydraulische Kraft in axialer Richtung etwa Null ist. Demzufolge können einfache und damit kostengünstige und bauraumsparende Axiallager für das Laufrad 23 bzw. die Abtriebswelle 24 eingesetzt werden. Vorteilhafterweise ist der Druck auf der Rückseite 23b so gestaltet, dass eine möglichst geringe resultierende hydraulische Kraft über alle Betriebszustände in einer festen Richtung anliegt, so dass das entsprechende Axiallager auch nur Kräfte in einer Richtung aufnehmen muss.

Erfindungsgemäß ist der auf der Rückseite 23b anliegende Druck aufgeteilt in den ersten Bereich 231 mit Einströmdruck p₂₁ und den zweiten Bereich 232, der entweder Kompensationsdruck p₁₁ oder Umgebungsdruck p₄₀ aufweist.

Für den Betrieb der Turbomaschine 20 als Radialturbine gilt:
- p₂₁ > p₂₂
- für die Ausführungsformen mit Druckraum 11: p₂₁ > p₁₁ > p₄₀ oder p₂₁ > p₄₀ > p₁₁
- für die Ausführungsformen ohne Druckraum: p₂₁ > p₄₀

Erfindungsgemäß müssen nun die Teilflächen der Rückseite 23b, also der erste Bereich 231 und der zweite Bereich 232, mit den Drücken p₂₁ und p₁₁ bzw. p₄₀ so bemessen sein und optional der Druck p₁₁ bzw. p₄₀ so gewählt sein, dass die gewünschte resultierende hydraulische Kraft auf das Laufrad 23 erreicht wird. Dabei kann diese resultierende hydraulische Kraft selbstverständlich nicht über alle Betriebszustände konstant gehalten werden, sondern soll sich in einem optimalen Bereich bewegen, vorzugsweise so, dass die Richtung bzw. Orientierung der Axialkraft gleich bleibt.

Bei den Maßnahmen zur Reduzierung der Axialkraft wird für die Abdichtung der verschiedenen Druckbereiche (p11 und p21) mit Spalt- oder Bürstendichtungen gearbeitet. Je nachdem welche Lösung gewählt wird muss mit gewissen Verlusten gerechnet werden, die aufgrund Leckage und/oder Reibung entstehen. Berührende Dichtsystem haben dabei zwar geringe Verluste aufgrund Leckage aber entsprechend hohe Reibung und Verschleiß. Berührungslose Dichtsysteme benötigen sehr enge Toleranzen und sind auch aufgrund rotordynamischer Effekte bezüglich minimaler Spalte begrenzt.
Besonders vorteilhaft ist damit ein Dichtsystem, dass auf der einen Seite berührungslos arbeitet, auf der anderen Seite einen minimalen Leckage Spalt sicherstellt, der unabhängig von Toleranzen und rotordynamischen Effekten sich selbst einstellt und reguliert.

Der erfindungsgemäße dampf- bzw. gasgeschmierte Druckteiler 9 verbindet diese Eigenschaften.
Dabei stehen das Laufrad 23 mit einer entsprechenden Mikrostruktur und der Gleitring 31 axial in direktem Kontakt. Der Gleitring 31 ist vorzugsweise schwimmend in dem Gehäuse 26 gelagert, wird mit einer verhältnismäßig geringen Federkraft in seiner axialen Grundposition gehalten und dichtet über eine Nebenabdichtung - vorzugsweise den Dichtring 33 - zum Gehäuse 26 ab. Vorteilhafterweise ist der Gleitring 31 in seiner Rotation gesperrt ist.

Wird die Turbomaschine 20 in Betrieb genommen, baut sich zwischen Laufrad 23 und Gleitring 31 ein lokaler Gas-/Dampfdruck auf, dessen resultierende Kraft ein Aufschwimmen des Gleitringes 31 bewirkt. Die Spalthöhe, die sich einstellt kann über verschiedene Designparameter (beispielsweise Durchmesser, Tiefe und Form der Mikrostruktur, Federkraft, Dämpfung) entsprechend gestaltet werden. Vorzugsweise werden so Spalthöhen zwischen 2 µm bis 20 µm eingestellt. Die Spalthöhe ist dabei im Wesentlichen unabhängig von der toleranzbehafteten Grundposition des Laufrades 23 zum Gehäuse 26 und unabhängig von den dynamischen Bewegungen des Laufrades 23. Dies wird dadurch sichergestellt, dass der Gleitring 31 aufgrund seiner schwimmenden Lagerung dem Laufrad 23 folgen kann. Die stabilen Kräfteverhältnisse am Gleitring 31 bestehend aus Anpresskraft und öffnender Kraft sind so zu gestalten, dass der Gleitring 31 trotz einer gewissen Trägheit den Bewegungen des Laufrades 23 folgen kann. Erfindungsgemäß wird dies durch eine axiale Wirkrichtung zwischen dem Gleitring 31 und dem Laufrad 23 erreicht.

## Patentansprüche

1. Turbomaschine (20) mit einem Gehäuse (26), wobei in dem Gehäuse (26) ein auf einer Abtriebswelle (24) angeordnetes Laufrad (23) angeordnet ist, wobei die Turbomaschine (20) einen Einströmbereich (21) und einen Ausströmbereich (22) aufweist und im Betrieb mit einem Arbeitsmedium durchströmt wird, wobei das Arbeitsmedium in den Einströmbereich (21), entlang einer an dem Laufrad (23) ausgebildeten Vorderseite (23a) und anschließend aus dem Ausströmbereich (22) strömt, wobei ein Druckgefälle auf der Vorderseite (23a) zwischen dem Einströmbereich (21) und dem Ausströmbereich (22) besteht, wobei an der der Vorderseite (23a) gegenüberliegenden Rückseite (23b) des Laufrads (23) ein Druckteiler (9) angeordnet ist, so dass im Betrieb zumindest ein Teil der Rückseite (23b) mit einem geringeren Druck als dem Druck des Einströmbereichs (21) belastet ist,
**dadurch gekennzeichnet, dass** der Druckteiler (9) als dampfgeschmierte Dichtung ausgeführt ist, wobei die Dichtung einen Gleitring (31) umfasst, der mit der Rückseite (23b) in axialer Richtung des Laufrads (23) zusammenwirkt.

2. Turbomaschine (20) nach Anspruch 1, **dadurch gekennzeichnet, dass** am Gehäuse (26) ein Wellendichtring (25) angeordnet ist, wobei der Wellendichtring (25) mit der Abtriebswelle (24) zusammenwirkt und wobei zwischen dem Gehäuse (26), dem Wellendichtring (25), dem Laufrad (23) und dem Druckteiler (9) ein Druckraum (11) ausgebildet ist.

3. Turbomaschine (20) nach Anspruch 2, **dadurch gekennzeichnet, dass** der Druckraum (11) hydraulisch mit dem Ausströmbereich (22) verbunden ist.

4. Turbomaschine (20) nach Anspruch 3, **dadurch gekennzeichnet, dass** die hydraulische Verbindung vom Druckraum (11) zum Ausströmbereich (22) über zumindest eine in der Abtriebswelle (24) ausgebildete Bohrung (24a, 24b, 24c) erfolgt.

5. Turbomaschine (20) nach einem der vorhergehenden Ansprüche, **dadurch gekennzeichnet, dass** der Druckteiler (9) die Rückseite (23b) bezüglich der Druckbelastung im Betrieb in einen ersten Bereich (231) und einen zweiten Bereich (232) unterteilt, wobei der erste Bereich (231) mit einem höheren Druck belastet ist als der zweite Bereich (232).

6. Turbomaschine (20) nach Anspruch 5, **dadurch gekennzeichnet, dass** der erste Bereich (231) mit dem Druckniveau des Einströmbereichs (21) beaufschlagt ist.

7. Turbomaschine (20) nach Anspruch 5 oder 6, **dadurch gekennzeichnet, dass** der zweite Bereich (232) mit dem Druckniveau des Ausströmbereichs (22) beaufschlagt ist.

8. Turbomaschine (20) nach einem der vorhergehenden Ansprüche, **dadurch gekennzeichnet, dass** die Turbomaschine (20) als Radialturbine ausgeführt ist.

9. Abwärmerückgewinnungssystem (1) mit einer Turbomaschine (20) nach einem der Ansprüche 1 bis 8, einem Kondensator (28), einer Pumpe (30) und einem Verdampfer (27).

## Claims

1. Turbomachine (20) with a casing (26), wherein an impeller (23), which is arranged on an output shaft (24), is arranged in the casing (26), wherein the turbomachine (20) has an inflow region (21) and an outflow region (22) and during operation is exposed to a throughflow of working medium, wherein the working medium flows into the inflow region (21), along a front side (23a) which is formed on the impeller (23) and then flows out of the outflow region (22), wherein a pressure drop exists on the front side (23a) between the inflow region (21) and the outflow region (22), wherein a pressure divider (9) is arranged on the rear side (23b) of the impeller (23) which is opposite the front side (23a) so that during operation at least a part of the rear side (23b) is loaded with a lower pressure than the pressure of the inflow region (21),
**characterized in that** the pressure divider (9) is constructed as a steam-lubricated seal, wherein the seal comprises a slide ring (31) which interacts with the rear side (23b) in the axial direction of the impeller (23).

2. Turbomachine (20) according to Claim 1, **characterized in that** a shaft sealing ring (25) is arranged on the casing (26), wherein the shaft sealing ring (25) interacts with the output shaft (24) and wherein a pressure chamber (11) is formed between the casing (26), the shaft sealing ring (25), the impeller (23) and the pressure divider (9).

3. Turbomachine (20) according to Claim 2, **characterized in that** the pressure chamber (11) is hydraulically connected to the outflow region (22).

4. Turbomachine (20) according to Claim 3, **characterized in that** the hydraulic connection from the pressure chamber (11) to the outflow region (22) is effected via at least one hole (24a, 24b, 24c) which is formed in the output shaft (24).

5. Turbomachine (20) according to one of the preceding claims, **characterized in that** the pressure divider (9) subdivides the rear side (23b) with regard to the pressure load during operation into a first region (231) and a second region (232), wherein the first region (231) is loaded with a higher pressure than the second region (232).

6. Turbomachine (20) according to Claim 5, **characterized in that** the first region (231) is acted upon by the pressure level of the inflow region (21).

7. Turbomachine (20) according to Claim 5 or 6, **characterized in that** the second region (232) is acted upon by the pressure level of the outflow region (22).

8. Turbomachine (20) according to one of the preceding claims, **characterized in that** the turbomachine (20) is constructed as a radial turbine.

9. Waste heat recovery system (1) with a turbomachine (20) according to one of Claims 1 to 8, a condenser (28), a pump (30) and an evaporator (27).

## Revendications

1. Turbomachine (20) comprenant un boîtier (26), une roue mobile (23) disposée sur un arbre de prise de force (24) étant disposée dans le boîtier (26), la turbomachine (20) présentant une région d'entrée d'écoulement (21) et une région de sortie d'écoulement (22) et étant parcourue par un fluide de travail pendant le fonctionnement, le fluide de travail s'écoulant dans la région d'entrée d'écoulement (21), le long d'un côté avant (23a) réalisé au niveau de la roue mobile (23) et ensuite hors de la région de sortie d'écoulement (22), un gradient de pression existant sur le côté avant (23a) entre la région d'entrée d'écoulement (21) et la région de sortie d'écoulement (22), un diviseur de pression (9) étant disposé au niveau du côté arrière (23b) de la roue mobile (23) opposé au côté avant (23a), de telle sorte que pendant le fonctionnement, au moins une partie du côté arrière (23b) soit sollicitée avec une plus faible pression que la pression de la région d'entrée d'écoulement (21),
**caractérisée en ce que** le diviseur de pression (9) est réalisé sous forme de joint d'étanchéité lubrifié à la vapeur, le joint d'étanchéité comprenant une bague de glissement (31) qui coopère avec le côté arrière (23b) dans la direction axiale de la roue mobile (23).

2. Turbomachine (20) selon la revendication 1, **caractérisée en ce qu'**un joint à lèvre (25) est disposé sur le boîtier (26), le joint à lèvre (25) coopérant avec l'arbre de prise de force (24) et un espace de pression (11) étant réalisé entre le boîtier (26), le joint à lèvre (25), la roue mobile (23) et le diviseur de pression (9).

3. Turbomachine (20) selon la revendication 2, **caractérisée en ce que** l'espace de pression (11) est connecté hydrauliquement à la région de sortie d'écoulement (22).

4. Turbomachine (20) selon la revendication 3, **caractérisée en ce que** la liaison hydraulique de l'espace de pression (11) à la région de sortie d'écoulement (22) s'effectue par le biais d'au moins un alésage (24a, 24b, 24c) réalisé dans l'arbre de prise de force (24).

5. Turbomachine (20) selon l'une quelconque des revendications précédentes, **caractérisée en ce que** le diviseur de pression (9) divise le côté arrière (23b) par rapport à la sollicitation par pression pendant le fonctionnement en une première région (231) et une deuxième région (232), la première région (231) étant sollicitée avec une plus grande pression que la deuxième région (232).

6. Turbomachine (20) selon la revendication 5, **caractérisée en ce que** la première région (231) est sollicitée avec le niveau de pression de la région d'entrée d'écoulement (21).

7. Turbomachine (20) selon la revendication 5 ou 6, **caractérisée en ce que** la deuxième région (232) est sollicitée avec le niveau de pression de la région de sortie d'écoulement (22).

8. Turbomachine (20) selon l'une quelconque des revendications précédentes, **caractérisée en ce que** la turbomachine (20) est réalisée sous forme de turbine radiale.

9. Système de récupération de chaleur perdue (1) comprenant une turbomachine (20) selon l'une quelconque des revendications 1 à 8, un condenseur (28), une pompe (30) et un évaporateur (27).
